# EUROPEAN PATENT APPLICATION

(11) **EP 2 566 165 A2**
(43) Date of publication of application: **06.03.2013**
(21) Application number: 12180965.1
(22) Date of filing: 20.08.2012
(51) Int. Cl.: H04N 13/00, H04N 13/02

(54) **Image display apparatus and method for operating the same**

(30) Priority: 05.09.2011 KR 20110089729
(71) Applicant: LG Electronics, Seoul, 150-721 (KR)
(72) Inventor: Min, Kyungoh, 137-724 SEOUL (KR); Hwang, Gowoon, 137-724 SEOUL (KR); Yoon, Jonghyun, 137-724 SEOUL (KR)
(74) Representative: Cabinet Plasseraud

(57) **Abstract**

An image display apparatus and a method for operating the same are disclosed. The method for operating the image display apparatus includes entering a 3-dimensional (3D) mode, receiving color data and depth data of a 2-dimensional (2D) on screen display (OSD) according to the 3D mode, converting the 2D OSD into a 3D OSD using the color data and the depth data, and displaying a 3D image including the converted 3D OSD on a display.

## Description

### CROSS-REFERENCE TO RELATED APPLICATION

This application claims the priority benefit of Korean Patent Application No. 10-2011-0089729, filed on September 5, 2011 in the Korean Intellectual Property Office, the disclosure of which is incorporated herein by reference.

### BACKGROUND OF THE INVENTION

### 1. Field of the invention

The present invention relates to an image display apparatus and a method for operating the same, and more particularly to an image display apparatus, which is able to increase user convenience, and a method for operating the same.

### 2. Description of the Related Art

An image display apparatus functions to display images to a user. A user can view a broadcast program using an image display apparatus. The image display apparatus can display a broadcast program selected by the user on a display from among broadcast programs transmitted from broadcasting stations. The recent trend in broadcasting is a worldwide transition from analog broadcasting to digital broadcasting.

Digital broadcasting transmits digital audio and video signals. Digital broadcasting offers many advantages over analog broadcasting, such as robustness against noise, less data loss, ease of error correction, and the ability to provide clear, high-definition images. Digital broadcasting also allows interactive viewer services, compared to analog broadcasting.

### SUMMARY OF THE INVENTION

Therefore, the present invention has been made in view of the above problems, and it is an object of the present invention to provide an image display apparatus which is able to increase user convenience, and a method for operating the same.

It is another object of the present invention to provide an image display apparatus which is able to convert a 2-dimensional (2D) on screen display (OSD) into a 3-dimensional (3D) OSD according to a 3D mode and displaying the 3D OSD, and a method for operating the same.

In accordance with an aspect of the present invention, the above and other objects can be accomplished by the provision of a method for operating an image display apparatus, including entering a 3-dimensional (3D) mode by receiving a user input, receiving color data and depth data of a 2-dimensional (2D) on screen display (OSD),converting the 2D OSD into a 3D OSD using the color data and the depth data to create a left image and a right image; and displaying a 3D image including the converted 3D OSD on a display.

In accordance with another aspect of the present invention, there is provided a method for operating an image display apparatus, including entering a 3-dimensional (3D) mode, receiving color data and depth data of a 2-dimensional (2D) on screen display (OSD) according to the 3D mode, converting the 2D OSD into a 3D OSD using the color data and the depth data, and displaying a 3D image including the converted 3D OSD on a display.

In accordance with another aspect of the present invention, there is provided an image display apparatus including a formatter configured to convert a 2-dimensional (2D) on screen display (OSD) into a 3-dimensional (3D) OSD using color data and depth data of the 2D OSD when entering a 3D mode, and a display configured to display a 3D image including the converted 3D OSD.

According to the embodiments of the present invention, when entering a 3D mode, color data and depth data of a 2D OSD is received, the 2D OSD is converted into a 3D OSD using the color data and the depth data, and a 3D image including the converted 3D OSD is displayed on a display. Accordingly, it is possible to conveniently convert the 2D OSD into the 3D OSD and to increase user convenience.

Entry into the 3D mode may be performed when a 2D object indicating entry into the 3D mode in a home screen is selected. Accordingly, it is possible to conveniently enter the 3D mode.

Meanwhile, if the 3D OSD indicating a content type in a 3D image is selected, a content list corresponding to the content type is displayed. Accordingly, it is possible to increase user convenience.

If one piece of content is selected from a content list, the content is displayed in 3D. Accordingly, it is possible to increase user convenience.

### BRIEF DESCRIPTION OF THE DRAWINGS

The above and other objects, features and other advantages of the present invention will be more clearly understood from the following detailed description taken in conjunction with the accompanying drawings, in which:

FIG. 1 is a block diagram showing an internal configuration of an image display apparatus according to an embodiment of the present invention;

FIGS. 2A and 2B are block diagrams showing internal configurations of a set-top box and a display apparatus according to an embodiment of the present invention;

FIG. 3 is a block diagram showing an internal configuration of a controller of FIG. 1;

FIGs. 4(a)-4(e) are diagrams showing various formats of a 3D image;

FIGs. 5(a)-5(b) are diagrams showing an operation of a 3D viewing device according to the formats of FIGs. 4(a)-4(e);

FIGs. 6(a)-6(d) are diagrams showing various scaling schemes of a 3D image signal according to an embodiment of the present invention;

FIG. 7 is a diagram explaining an image formed by a left-eye image and a right-eye image;

FIG. 8 is a diagram explaining the depth of a 3D image according to a disparity between a left-eye image and a right-eye image;

FIG. 9 is a diagram showing a method of controlling a remote controller of FIG. 1;

FIG. 10 is a block diagram showing the internal configuration of the remote controller of FIG. 1;

FIG. 11 is a flowchart illustrating a method for operating an image display apparatus according to an embodiment of the present invention; and

FIGS. 12A to 18B are views referred to for describing various examples of the method for operating the image display apparatus, illustrated in FIG. 11.

### DETAILED DESCRIPTION OF THE PREFERRED EMBODIMENTS

Exemplary embodiments of the present invention will be described with reference to the attached drawings.

The terms "module" and "unit" attached to describe the names of components are used herein to help the understanding of the components and thus they should not be considered as having specific meanings or roles. Accordingly, the terms "module" and "unit" may be interchangeable in their use.

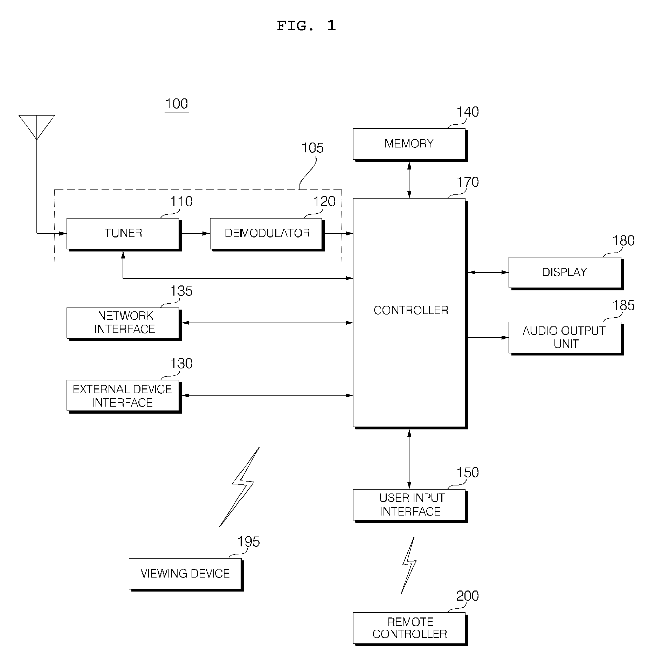

FIG. 1 a diagram showing the internal configuration of an image display apparatus according to an embodiment of the present invention.

Referring to FIG. 1, an image display apparatus 100 according to the embodiment of the present invention includes a broadcast reception unit 105, an external device interface 130, a memory 140, a user input interface 150, a sensor unit, a controller 170, a display 180, an audio output unit 185, and a viewing device 195.

The broadcast reception unit 105 may include a tuner unit 110, a demodulator 120 and a network interface135. Of course, as necessary, the broadcast reception unit 105 may include only the tuner unit 110 and the demodulator 120 or may include only the network interface135.

The tuner unit 110 tunes to a Radio Frequency (RF) broadcast signal corresponding to a channel selected by a user from among RF broadcast signals received through an antenna or RF broadcast signals corresponding to all channels previously stored in the image display apparatus. The tuned RF broadcast is converted into an Intermediate Frequency (IF) signal or a baseband Audio/Video (AV) signal.

For example, the tuned RF broadcast signal is converted into a digital IF signal DIF if it is a digital broadcast signal and is converted into an analog baseband AV signal (Composite Video Banking Sync/Sound Intermediate Frequency (CVBS/SIF)) if it is an analog broadcast signal. That is, the tuner unit 110 may process a digital broadcast signal or an analog broadcast signal. The analog baseband AV signal (CVBS/SIF) output from the tuner unit 110 may be directly input to the controller 170.

In addition, the tuner unit 110 may be capable of receiving RF broadcast signals from an Advanced Television Systems Committee (ATSC) single-carrier system or from a Digital Video Broadcasting (DVB) multi-carrier system.

The tuner unit 110 may sequentially select a number of RF broadcast signals corresponding to all broadcast channels previously stored in the image display apparatus by a channel storage function from a plurality of RF signals received through the antenna and may convert the selected RF broadcast signals into IF signals or baseband A/V signals.

The tuner unit 110 may include a plurality of tuners in order to receive broadcast signals of a plurality of channels. Alternatively, the tuner unit 110 may be a single tuner which simultaneously receives broadcast signals of a plurality of channels.

The demodulator 120 receives the digital IF signal DIF from the tuner unit 110 and demodulates the digital IF signal DIF.

The demodulator 120 may perform demodulation and channel decoding, thereby obtaining a stream signal TS. The stream signal TS may be a signal in which a video signal, an audio signal and a data signal are multiplexed.

The stream signal output from the demodulator 120 may be input to the controller 170 and thus subjected to demultiplexing and A/V signal processing. The processed video and audio signals are output to the display 180 and the audio output unit 185, respectively.

The external device interface 130 may serve as an interface between an external device and the image display apparatus 100. For interfacing, the external device interface 130 may include an A/V Input/Output (I/O) unit and/or a wireless communication module.

The external device interface 130 may be connected to an external device such as a Digital Versatile Disk (DVD) player, a Blu-ray player, a game console, a camera, a camcorder, or a computer (e.g., a laptop computer), wirelessly or by wire and may receive or transmit data from or to the external device.

The A/V I/O unit may receive a video and audio signal of an external device. The wireless communication module may perform short-range wireless communication with other electronic devices.

The network interface 135 serves as an interface between the image display apparatus 100 and a wired/wireless network such as the Internet. The network interface 135 may receive content or data provided by an Internet or content provider or a network operator over a network.

The memory 140 may store various programs necessary for the controller 170 to process and control signals, and may also store processed video, audio and data signals.

The memory 140 may temporarily store a video, audio and/or data signal received from the external device interface 130. The memory 140 may store information about a predetermined broadcast channel by the channel storage function.

While the memory 140 is shown in FIG. 1 as configured separately from the controller 170, to which the present invention is not limited, the memory 140 may be incorporated into the controller 170.

The user input interface 150 transmits a signal input by the user to the controller 170 or transmits a signal received from the controller 170 to the user.

For example, the user input interface 150 may transmit or receive various user input signals such as a power-on/off signal, a channel selection signal, and a screen setting signal to or from a remote controller 200, transmit a user input signal input by a local key such as a power key, a channel key, a volume key and a setting key to the controller 170, transmit a user input signal received by a sensor unit for sensing a user gesture to the controller 170, or transmit a signal from the controller 170 to the sensor unit.

The controller 170 may demultiplex the stream signal TS received from the tuner unit 110, the demodulator 120, or the external device interface 130 into a number of signals, process the demultiplexed signals into audio and video data, and output the audio and video data.

The video signal processed by the controller 170 may be displayed as an image on the display 180. The video signal processed by the controller 170 may also be transmitted to an external output device through the external device interface 130.

The audio signal processed by the controller 170 may be output to the audio output unit 185. Also, the audio signal processed by the controller 170 may be transmitted to the external output device through the external device interface 130.

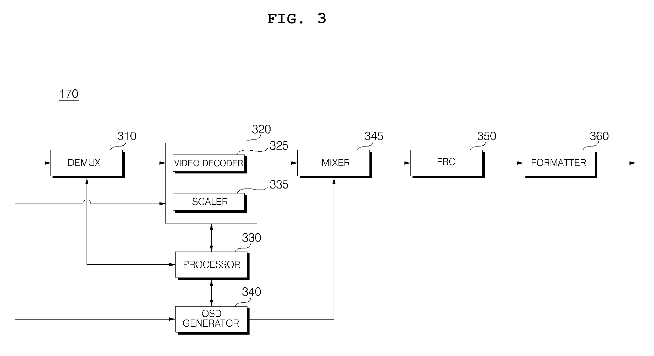

The controller 170 may include a DEMUX, a video processor, etc., which will be described in detail later with reference to FIG. 3.

The controller 170 may control the overall operation of the image display apparatus 100. For example, the controller 170 controls the tuner unit 110 to tune to an RF signal corresponding to a channel selected by the user or a previously stored channel.

The controller 170 may control the image display apparatus 100 by a user command input through the user input interface 150 or an internal program.

The controller 170 may control the display 180 to display images. The image displayed on the display 180 may be a Two-Dimensional (2D) or Three-Dimensional (3D) still image or moving picture.

The controller 170 may generate and display a 3D object with respect to a predetermined object among images displayed on the display 180. For example, the object may be at least one of an accessed web screen (newspaper, magazine, etc.), an EPG, various menus, a widget, an icon, a still image, a moving image, or a text file.

The 3D object may be processed to have a depth different from an image displayed on the display 180. Preferably, the 3D object may be processed to appear to protrude from an image displayed on the display 180.

The controller 170 recognizes the position of the user based on an image captured by a camera unit. For example, a distance (z-axis coordinate) between the user and the image display apparatus 100 may be detected. An x-axis coordinate and a y-axis coordinate in the image display apparatus 100 corresponding to the position of the user may be detected.

A channel browsing processor for generating a thumbnail image corresponding to a channel signal or an external input signal may be further included. The channel browsing processor may receive the stream signal TS output from the demodulator 120 or the stream signal output from the external device interface 130, extract an image from the received stream signal, and generate a thumbnail image. The generated thumbnail image may be input to the controller 170 along with the decoded image. The controller 170 may display a thumbnail list including a plurality of thumbnail images on the display 180 using the input thumbnail image.

The thumbnail list may be displayed in a brief view method of displaying the thumbnail list in a part of an area in a state of displaying a predetermined image on the display 180 or may be displayed in a full viewing method of displaying the thumbnail list in a full area of the display 180. The thumbnail images of the thumbnail list may be sequentially updated.

The display 180 converts the video signal, the data signal, the OSD signal and the control signal processed by the controller 170 or the video signal, the data signal and the control signal received by the external device interface 130 and generates a driving signal.

The display 180 may be a Plasma Display Panel (PDP), a Liquid Crystal Display (LCD), an Organic Light-Emitting Diode (OLED) display or a flexible display. In particular, the display 180 may be a 3D display.

For viewing a 3D image, the display 180 may be divided into a supplementary display method and a single display method. In the single display method, a 3D image is implemented on the display 180 without a separate subsidiary device, for example, glasses. The single display method may include, for example, a lenticular method, a parallax barrier, or the like.

In the supplementary display method, a 3D image is implemented on the display 180 using a subsidiary device. The supplementary display method includes various methods such as a Head-Mounted Display (HMD) method or a glasses method.

The glasses method may be divided into a passive method such as a polarized glasses method and an active method such as a shutter glasses method. The HMD method may be divided into a passive method and an active method.

The 3D viewing device 195 may be 3D glasses capable of viewing a 3D image. The 3D glasses 195 may include passive polarized glasses or active shutter glasses and may also include the above-described HMD method.

For example, if the viewing device 195 is polarized glasses, a left-eye glass may be implemented by a left-eye polarized glass and a right-eye glass may be implemented by a right-eye polarized glass.

As another example, if the viewing device 195 is shutter glasses, left-eye and right-eye glasses may be alternately opened or closed.

The viewing device 195 may be 2D glasses capable of allowing users to view different images.

For example, if the viewing device 195 is polarized glasses, the viewing device may be implemented by the same polarized glasses. That is, both the left-eye and the right-eye glasses of the first viewing device 195a include glasses polarized in a first direction and the left-eye and right-eye glasses of the second viewing device 195b may include right-eye polarized glasses polarized in a second direction different from the first direction.

As another example, if the viewing device 195 is shutter glasses, the glasses may be opened or closed at the same time. That is, both the left-eye and right-eye glasses of the first viewing device 195a may be opened for a first time and closed for a second time, and both the left-eye and right-eye glasses of the second viewing device 195b may be closed for a first time and opened for a second time.

If the display 180 is a touch screen, the display 180 may function as not only an output signal but also an input device.

The audio output unit 185 receives the audio signal processed by the controller 170 and outputs the received audio signal as sound.

The camera unit captures the image of the user. Although the cameral unit may include one camera, the present invention is not limited thereto and the camera unit may include a plurality of cameras. The camera unit may be disposed on the display 180 or may be separately provided. The image information captured by the camera unit is input to the controller 170.

The control unit 170 may sense a user's gesture by the image captured by the camera unit, the signal sensed by the sensor unit, or a combination thereof.

The remote controller 200 transmits a user input to the user input interface 150. For transmission of user input, the remote controller 200 may use various communication techniques such as IR communication, RF communication, Bluetooth, Ultra Wideband (UWB) and ZigBee. In addition, the remote controller 200 may receive a video signal, an audio signal or a data signal from the user input interface 150 and output the received signals visually or audibly.

The above-described image display apparatus 100 may be a fixed or mobile digital broadcast receiver. The image display apparatus described in the present specification may include a TV receiver, a monitor, a projector, a mobile phone, a smart phone, a notebook computer, a digital broadcast terminal, a Personal Digital Assistant (PDA), a Portable Multimedia Player (PMP), etc.

The block diagram of the image display apparatus 100 illustrated in FIG. 1 is only exemplary. Depending upon the specifications of the image display apparatus 100 in actual implementation, the components of the image display apparatus 100 may be combined or omitted or new components may be added. That is, two or more components are incorporated into one component or one component may be configured as separate components, as needed. In addition, the function of each block is described for the purpose of describing the embodiment of the present invention and thus specific operations or devices should not be construed as limiting the scope and spirit of the present invention.

Unlike FIG. 1, the image display apparatus 100 may not include the tuner unit 110 and the demodulator 120 shown in FIG. 1 and may receive image content through the network interface 135 or the external device interface 130 and reproduce the image content.

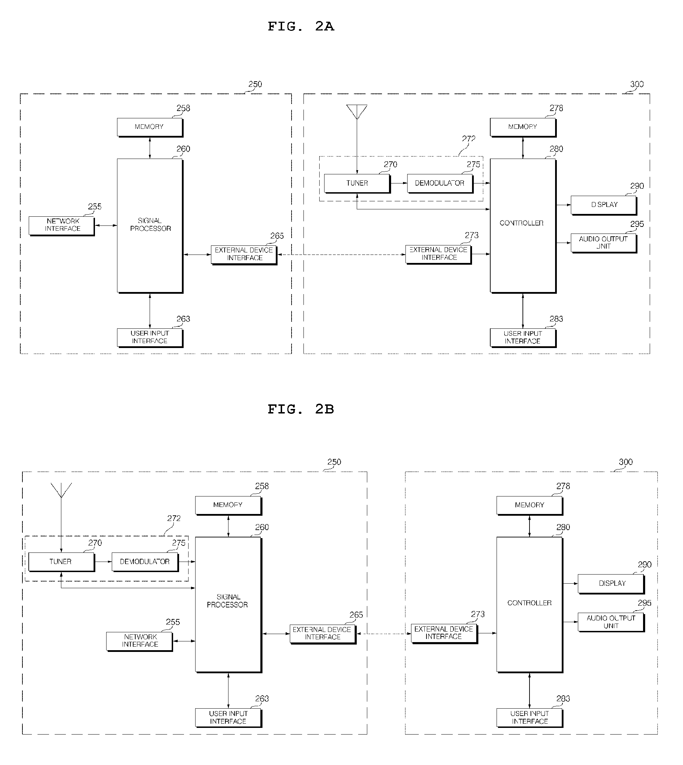

The image display apparatus 100 is an example of an image signal processing apparatus that processes an image stored in the apparatus or an input image. Other examples of the image signal processing apparatus include a set-top box without the display 180 and the audio output unit 185, a DVD player, a Blu-ray player, a game console, and a computer. The set-top box will be described later with reference to FIGS. 2A and 2B.

FIGS. 2A and 2B are block diagrams showing internal configurations of a set-top box and a display device according to an embodiment of the present invention.

Referring to FIG. 2A, a set-top box 250 and a display device 300 may transmit or receive data wirelessly or by wire. The set-top box 250 may include a network interface 255, a memory 258, a signal processor 260, a user input interface 263, and an external device interface 265.

The network interface 255 serves as an interface between the set-top box 250 and a wired/wireless network such as the Internet. The network interface 255 may transmit data to or receive data from another user or another electronic device over a connected network or over another network linked to the connected network.

The memory 258 may store programs necessary for the signal processor 260 to process and control signals and temporarily store a video, audio and/or data signal received from the external device interface 265 or the network interface 255.

The signal processor 260 processes an input signal. For example, the signal processor 260 may demultiplex or decode an input video or audio signal. For signal processing, the signal processor 260 may include a video decoder or an audio decoder. The processed video or audio signal may be transmitted to the display device 300 through the external device interface 265.

The user input interface 263 transmits a signal received from the user to the signal processor 260 or a signal received from the signal processor 260 to the user. For example, the user input interface 263 may receive various control signals such as a power on/off signal, an operation input signal, and a setting input signal through a local key or the remote controller 200 and output the control signals to the signal processor 260.

The external device interface 265 serves as an interface between the set-top box 250 and an external device that is connected wirelessly or by wire, particularly the display device 300, for signal transmission or reception. The external device interface 265 may also interface with an external device such as a game console, a camera, a camcorder, and a computer (e.g. a laptop computer), for data transmission or reception.

The set-top box 250 may further include a media input unit for media playback. The media input unit may be a Blu-ray input unit, for example. That is, the set-top box 250 may include a Blu-ray player. After signal processing such as demultiplexing or decoding in the signal processor 260, a media signal from a Blu-ray disk may be transmitted to the display device 300 through the external device interface 265 so as to be displayed on the display device 300.

The display device 300 may include a broadcast reception unit 272, an external device interface 273, a memory 278, a controller 280, a user input interface 283, a display 290, and an audio output unit 295.

The broadcast reception unit 272 may include a tuner 270 and a demodulator 275.

The tuner 270, the demodulator 275, the memory 278, the controller 280, the user input interface 283, the display 290, and the audio output unit 295 are identical respectively to the tuner unit 110, the demodulator 120, the memory 140, the controller 170, the user input interface 150, the display 180, and the audio output unit 185 illustrated in FIG. 1 and thus a description thereof is not provided herein.

The external device interface 273 serves as an interface between the display device 300 and a wireless or wired external device, particularly the set-top box 250, for data transmission or reception.

Hence, a video signal or an audio signal received through the set-top box 250 is output through the display 290 or the audio output unit 295 under the control of the controller 280.

Referring to FIG. 2B, the configuration of the set-top box 250 and the display device 300 illustrated in FIG. 2B is similar to that of the set-top box 250 and the display device 300 illustrated in FIG. 2A, except that the broadcast reception unit 272 resides in the set-top box 250, not in the display device 300, and the broadcast reception unit 272 further includes a network interface 255. Hereinafter, such difference will be focused upon.

The signal processor 260 may process a broadcast signal received through the tuner 270 and the demodulator 275. The user input interface 263 may receive a channel selection input, a channel store input, etc.

Although the audio output unit 185 of FIG. 1 is not shown in the set-top box 250 of FIGS. 2A and 2B, a separate audio output unit may be included.

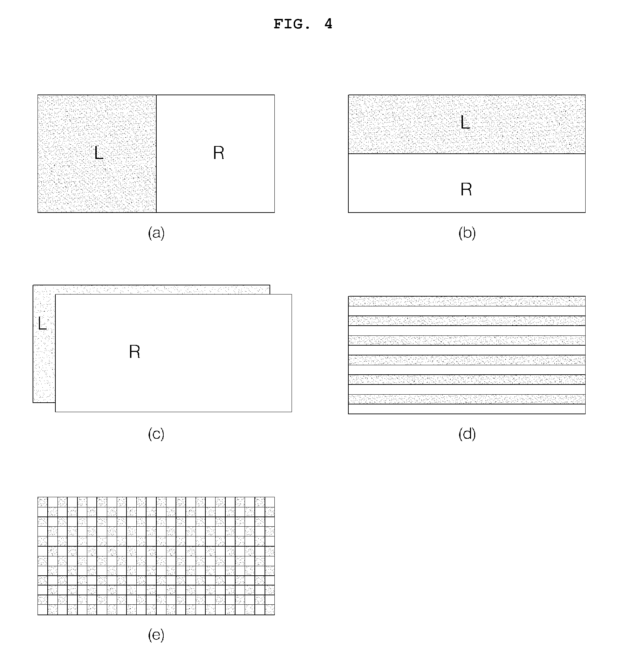

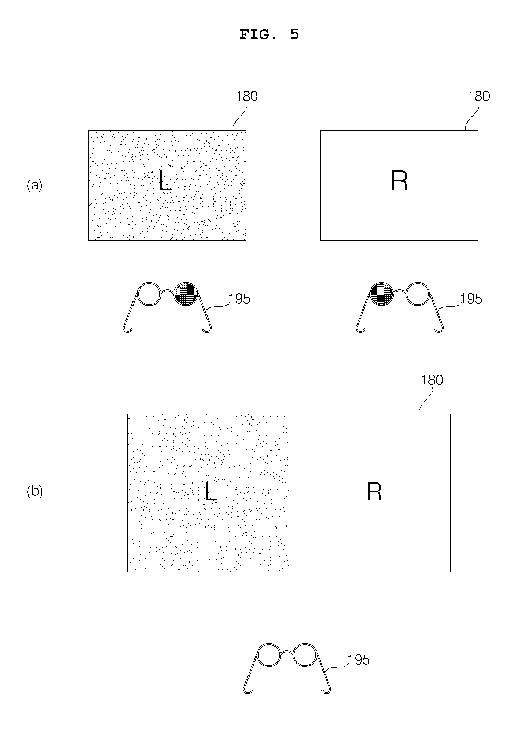

FIG. 3 is a block diagram showing the internal configuration of the controller illustrated in FIG. 1, FIGs. 4(a)-4(e) are diagrams showing various formats of a 3D image, and FIGs. 5(a)-5(b) are diagrams showing an operation of a 3D viewing device according to the formats of FIGs. 4(a)-4(e).

Referring to FIG. 3, the controller 170 according to the embodiment of the present invention may include a DEMUX 310, a video processor 320, an OSD generator 340, a mixer 345, a Frame Rate Converter (FRC) 350, and a formatter 360. The controller 170 may further include an audio processor and a data processor.

The DEMUX 310 demultiplexes an input stream. For example, the DEMUX 310 may demultiplex an MPEG-2 TS into a video signal, an audio signal, and a data signal. The input stream signal may be received from the tuner unit 110, the demodulator 120 or the external device interface 130.

The video processor 320 may process the demultiplexed video signal. For video signal processing, the video processor 320 may include a video decoder 325 and a scaler 335.The video decoder 325 decodes the demultiplexed video signal and the scaler 335 scales the resolution of the decoded video signal so that the video signal can be displayed on the display 180. The video decoder 325 may be provided with decoders that operate based on various standards.

The video signal decoded by the video processor 320 may include a 2D video signal, a mixture of a 2D video signal and a 3D video signal, or a 3D video signal. For example, an external video signal received from the external device 190 or a broadcast video signal received from the tuner unit 110 includes a 2D video signal, a mixture of a 2D video signal and a 3D video signal, or a 3D video signal. Thus, the controller 170 and, more particularly, the video processor 320 may perform signal processing and output a 2D video signal, a mixture of a 2D video signal and a 3D video signal, or a 3D video signal.

The decoded video signal from the video processor 320 may have any one of various available formats. For example, the decoded video signal may be a 3D video signal with a color image and a depth image or a 3D video signal with multi-viewpoint image signals. The multi-viewpoint image signals may include, for example, a left-eye image signal and a right-eye image signal.

Formats of the 3D video signal may include a side-by-side format (FIG. 4(a)) in which the left-eye image L and the right-eye image R are arranged in a horizontal direction, a top/down format (FIG. 4(b)) in which the left-eye image and the right-eye image are arranged in a vertical direction, a frame sequential format (FIG. 4(c)) in which the left-eye image and the right-eye image are time-divisionally arranged, an interlaced format (FIG. 4(d)) in which the left-eye image and the right-eye image are mixed in line units, and a checker box format (FIG. 4(e)) in which the left-eye image and the right-eye image are mixed in box units.

The processor 330 may control the overall operation of the image display apparatus 100 or the controller 170. For example, the processor 330 controls the tuner unit 110 to tune to a RF broadcast corresponding to a channel selected by a user or a previously stored channel.

The processor 330 may control the image display apparatus 100 by a user command input through the user input interface 150 or an internal program.

The processor 330 may control transmission or reception of data to or from the network interface 135 or the external device interface 130.

The processor 330 may control the operations of the DEMUX 310, the image processor 320 and the OSD generator 340 of the controller 170.

The OSD generator 340 generates an OSD signal autonomously or according to a user input. For example, the OSD generator 340 may generate signals by which a variety of information is displayed as graphics or text on the display 180, according to user input signals. The OSD signal may include various data such as a User Interface (UI), a variety of menus, widgets, icons, etc. Also, the OSD signal may include a 2D object and/or a 3D object.

The OSD generator 340 may generate a pointer which may be displayed on the display, based on a pointing signal received from the remote controller 200. In particular, such a pointer may be generated by a pointing signal processor. The OSD generator 340 may include such a pointing signal processor). The pointing signal processor may not be provided in the OSD generator 340 and may be provided separately from the OSD generator 340.

The mixer 345 may mix the decoded video signal processed by the video processor 320 with the OSD signal generated by the OSD generator 340. The OSD signal and the decoded video signal each may include at least one of a 2D signal or a 3D signal. The mixed video signal is provided to the FRC 350.

The FRC 350 may change the frame rate of the received video signal. The FRC 350 may output an input frame rate without frame rate conversion.

The formatter 360 may arrange a left-eye video frame and a right-eye video frame of the 3D video signal subjected to frame rate conversion. The formatter 360 may output a synchronization signal Vsync for opening the left-eye glass and the right-eye glass of the 3D viewing device 195.

The formatter 360 may separate a 2D video signal and a 3D video signal from the mixed video signal of the OSD signal and the decoded video signal received from the mixer 345.

Herein, a 3D video signal refers to a signal including a 3D object such as a Picture-In-Picture (PIP) image (still or moving), an EPG that describes broadcast programs, various menus, a widget, text, an object within an image, a person, a background, or a Web page (e.g. from a newspaper, a magazine, etc.).

The formatter 360 may change the format of the 3D video signal, for example, to one of the various formats illustrated in FIGs. 4a-4e. As shown in FIGs. 5(a)-5(b), an operation of a 3D viewing device of a glasses type may be performed according to the format.

FIG. 5(a) illustrates an exemplary operation of the 3D viewing device 195 and, more particularly, the shutter glasses 195 in the case where the formatter 360 outputs the frame sequential format illustrated in FIG. 4c.

When the left-eye image L is displayed on the display 180, the left lens of the shutter glasses 195 is opened and the right lens is closed. When the right-eye image R is displayed on the display 180, the left lens of the shutter glasses 195 is closed and the right lens is opened.

FIG. 5(b) illustrates an exemplary operation of the 3D viewing device 195 and, more particularly, the polarized glasses 195 in the case where the formatter 360 outputs the side-by-side format illustrated in FIG. 4a. The 3D viewing device 195 illustrated in FIG. 5(b) may be shutter glasses. The shutter glasses may operate like the polarized glasses by maintaining both the left-eye lens and the right-eye lens in an open state.

Meanwhile, the formatter 360 may convert a 2D video signal into a 3D video signal. For example, the formatter 360 may detect edges or a selectable object from the 2D video signal and generate a 3D video signal with an object based on the detected edges or the selectable object. As described before, the 3D video signal may be separated into left-eye and right-eye image signals L and R.

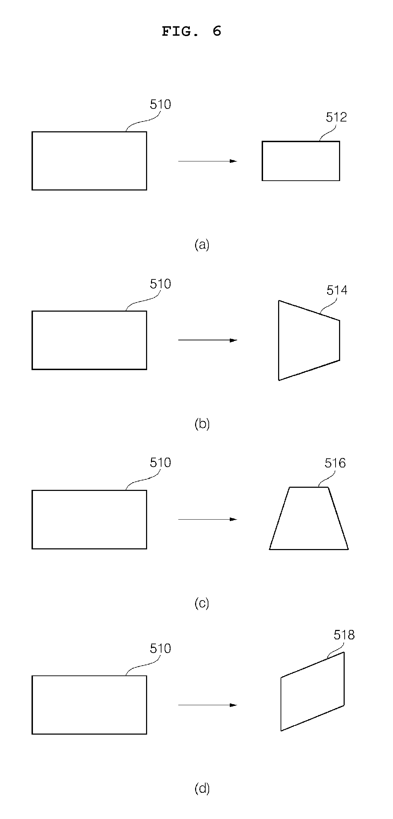

A 3D processor for 3D effect signal processing may be further provided next to the formatter 360. The 3D processor may control brightness, tint, and color of the video signal, for 3D effect improvement. For example, a short-distance video signal may be clearly processed and a long-distance video signal may be blurredly processed. The function of the 3D processor may be incorporated into the formatter 360 or the video processor 320, which will be described later with reference to FIGs. 6(a)-6(d).

The audio processor of the controller 170 may process the demultiplexed audio signal. For audio processing, the audio processor may include various decoders.

The audio processor of the controller 170 may control bass, treble, and volume of the audio signal.

The data processor of the controller 170 may process the demultiplexed data signal. For example, if the demultiplexed data signal was encoded, the data processor may decode the data signal. The encoded data signal may be Electronic Program Guide (EPG) information including broadcasting information such as the starts, ends, etc. of broadcast programs of each channel.

Although the signals from the OSD generator 340 and the video processor 320 are mixed by the mixer 345 and then are subjected to 3D processing by the formatter 360 in FIG. 3, the present invention is not limited thereto and the mixer may be located at the next stage of the formatter. That is, the formatter 360 may perform 3D processing with respect to the output of the video processor 320, the OSD generator 340 may perform OSD generation and 3D processing, and then the mixer 345 may mix the processed 3D signals.

The block diagram of the controller 170 shown in FIG. 3 is exemplary. The components of the block diagrams may be integrated or omitted, or a new component may be added.

In particular, the FRC 350 and the formatter 360 may not be provided in the controller 170 and may be provided separately from the controller 170.

FIGs. 6(a)-6(d) are diagrams showing various scaling schemes of a 3D image signal according to an embodiment of the present invention.

Referring to FIGs. 6(a)-6(d), in order to increase the 3D effect, the controller 170 may perform 3D effect signal processing. In particular, the size or slope of a 3D object in a 3D image may be controlled.

A 3D video signal or a 3D object 510 of the 3D video signal may be enlarged or reduced to a predetermined ratio (512) as shown in FIG. 6(a) or the 3D object may be partially enlarged or reduced (trapezoids 514 and 516) as shown in FIGS. 6(b) and 6(c). As shown in FIG. 6(d), the 3D object may be at least partially rotated (parallelogram 518). By scaling (size control) or slope control, the 3D effect of the 3D image or the 3D object of the 3D image may be increased.

As the slope is increased, a difference between the lengths of both parallel sides of the trapezoids 514 and 516 may be increased as shown in FIG. 6(b) or 6(c) or a rotation angle is increased as shown in FIG. 6(d).

Size control or slope control may be performed after the 3D video signal is converted into a predetermined format by the formatter 360 or may be performed by the scaler of the video processor 320. In addition, the OSD generator 340 may generate an OSD signal so as to generate an object in shapes shown in FIGs. 6(a)-6(d), in order to increase the 3D effect.

As signal processing for the 3D effect, signal processing such as control of brightness, tint, and color of the video signal or the object may be performed in addition to size control or slope control shown in FIGs. 6(a)-6(d). For example, a short-distance video signal may be clearly processed and a long-distance video signal may be blurredly processed. Signal processing for the 3D effect may be performed by the controller 170 or a separate 3D processor. If signal processing for the 3D effect is performed by the controller 170, signal processing for the 3D effect may be performed by the formatter 360 or the video processor 320 along with size control or slope control.

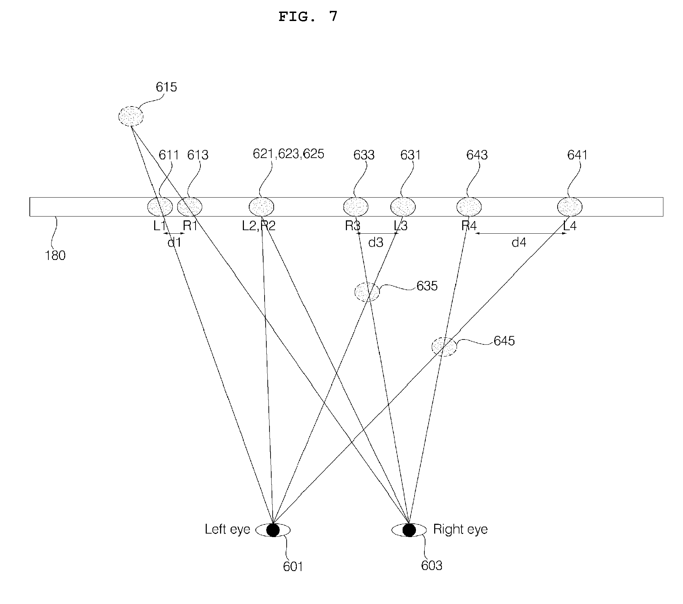

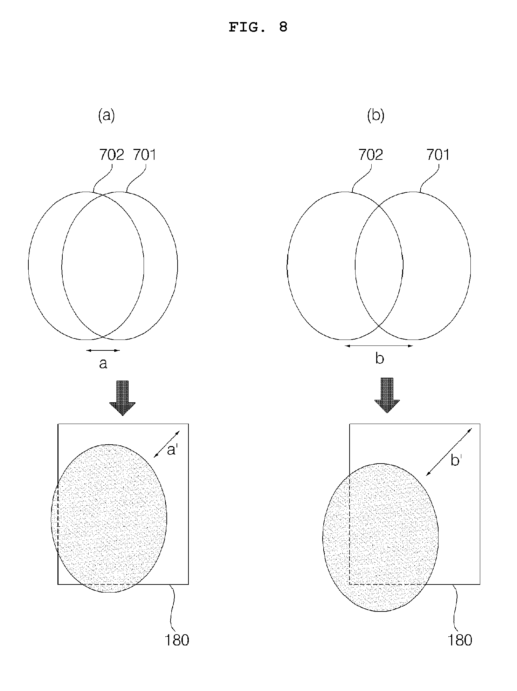

FIG. 7 is a diagram explaining an image formed by a left-eye image and a right-eye image, and FIG. 8 is a diagram explaining the depth of a 3D image according to a disparity between a left-eye image and a right-eye image.

First, referring to FIG. 7, a plurality of images or a plurality of objects 615, 625, 635 or 645 is shown.

A first object 615 includes a first left-eye image 611 (L) based on a first left-eye image signal and a first right-eye image 613 (R) based on a first right-eye image signal, and a disparity between the first left-eye image 611 (L) and the first right-eye image 613 (R) is d1 on the display 180. The user sees an image as formed at the intersection between a line connecting a left eye 601 to the first left-eye image 611 and a line connecting a right eye 603 to the first right-eye image 613. Therefore, the user perceives the first object 615 as being located behind the display 180.

Since a second object 625 includes a second left-eye image 621 (L) and a second right-eye image 623 (R), which are displayed on the display 180 to overlap, a disparity between the second left-eye image 621 and the second right-eye image 623 is 0. Thus, the user perceives the second object 625 as being on the display 180.

A third object 635 includes a third left-eye image 631 (L) and a third right-eye image 633 (R) and a fourth object 645 includes a fourth left-eye image 641 (L) and a fourth right-eye image 643 (R). A disparity between the third left-eye image 631 and the third right-eye images 633 is d3 and a disparity between the fourth left-eye image 641 and the fourth right-eye image 643 is d4.

The user perceives the third and fourth objects 635 and 645 at image-formed positions, that is, as being positioned before the display 180.

Because the disparity d4 between the fourth left-eye image 641 (L) and the fourth right-eye image 643 (R) is greater than the disparity d3 between the third left-eye image 631 (L) and the third right-eye image 633 (R), the fourth object 645 appears to be positioned closer to the viewer than the third object 635.

In embodiments of the present invention, the distances between the display 180 and the objects 615, 625, 635 and 645 are represented as depths. When an object is perceived as being positioned behind the display 180, the depth of the object is negative-signed. On the other hand, when an object is perceived as being positioned before the display 180, the depth of the object is positive-signed. Therefore, as an object appears closer to the user, the depth of the object is larger.

Referring to FIG. 8, if the disparity between a left-eye image 701 and a right-eye image 702 in FIG. 8(a) is smaller than the disparity b between the left-eye image 701 and the right-eye image 702 in FIG. 8(b), the depth a' of a 3D object created in FIG. 8(a) is smaller than the depth b' of a 3D object created in FIG. 8(b).

In the case where a left-eye image and a right-eye image are combined into a 3D image, the positions of the images perceived by the user may appear changed by the disparity between the left-eye image and the right-eye image. This means that the depth of a 3D image or 3D object formed with a left-eye image and a right-eye image in combination may be controlled by adjusting the disparity between the left-eye and right-eye images.

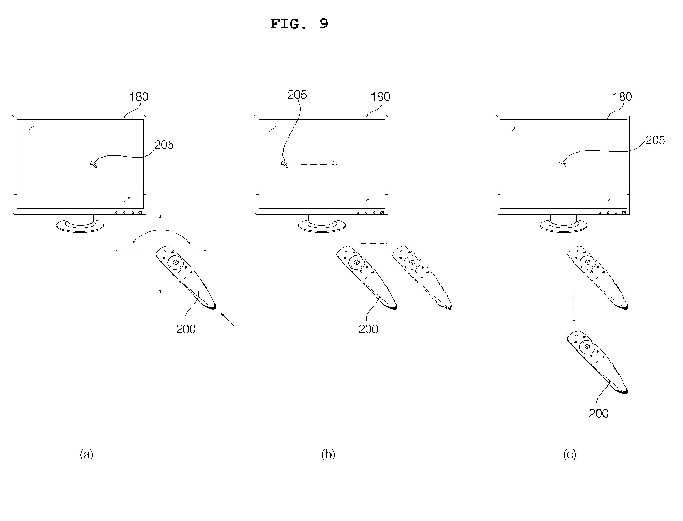

FIG. 9 is a diagram showing a method of controlling a remote controller of FIG. 1.

FIG. 9(a) illustrates a pointer 205 representing movement of the remote controller 200 displayed on the display 180.

The user may move or rotate the remote controller 200 up and down, side to side (FIG. 9(b)), and back and forth (FIG. 9(c)). The pointer 205 displayed on the display 180 of the image display apparatus corresponds to the movement of the remote controller 200. Since the pointer 205 moves in accordance with the movement of the remote controller 200 in a 3D space, the remote controller 200 may be referred to as a pointing device.

Referring to FIG. 9(b), if the user moves the remote controller 200 to the left, the pointer 205 moves to the left on the display 180 of the image display apparatus.

Information about the movement of the remote controller 200 sensed by the sensor of the remote controller 200 is transmitted to the image display apparatus. The image display apparatus may calculate the coordinates of the pointer 205 from the information about the movement of the remote controller 200. Then, the image display apparatus may display the pointer 205 at the calculated coordinates.

Referring to FIG. 9(c), while pressing a predetermined button of the remote controller 200, the user moves the remote controller 200 away from the display 180. Then, a selection area corresponding to the pointer 205 may be zoomed in on and enlarged on the display 180. On the contrary, if the user moves the remote controller 200 toward the display 180, the selection area corresponding to the pointer 205 is zoomed out and thus contracted on the display 180. Alternatively, when the remote controller 200 moves away from the display 180, the selection area may be zoomed out and when the remote controller 200 approaches the display 180, the selection area may be zoomed in.

With the predetermined button pressed in the remote controller 200, the up, down, left and right movements of the remote controller 200 may be ignored. That is, when the remote controller 200 moves away from or approaches the display 180, only the back and forth movements of the remote controller 200 are sensed, while the up, down, left and right movements of the remote controller 200 are ignored. Unless the predetermined button is pressed in the remote controller 200, the pointer 205 moves in accordance with the up, down, left or right movement of the remote controller 200.

The speed and direction of the pointer 205 may correspond to the speed and direction of the remote controller 200.

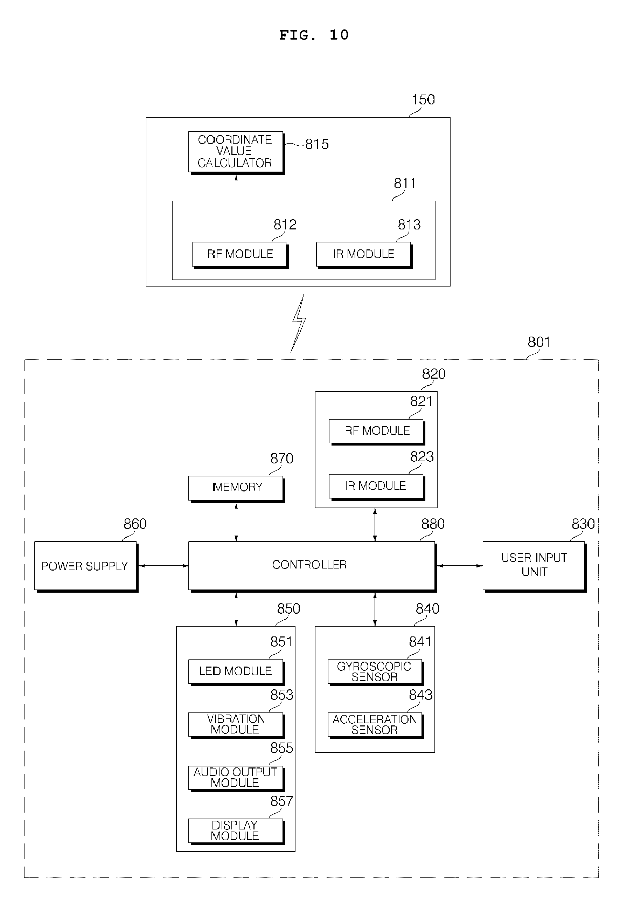

FIG. 10 is a block diagram showing the internal configuration of the remote controller of FIG. 1.

Referring to FIG. 10, the remote controller 200 may include a wireless communication module 825, a user input unit 835, a sensor unit 840, an output unit 850, a power supply 860, a memory 870, and a controller 880.

The wireless communication module 825 transmits signals to and/or receives signals from either of the afore-described image display apparatuses according to the embodiments of the present invention, herein, the image display apparatus 100.

In the present embodiment, the remote controller 200 may include an RF module 821 for transmitting or receiving signals to or from the image display apparatus 100 according to an RF communication standard. The remote controller 200 may also include an IR module 823 for transmitting or receiving signals to or from the image display apparatus 100 according to an IR communication standard.

In the present embodiment, the remote controller 200 transmits information about the movement of the remote controller 200 to the image display apparatus 100 through the RF module 821.

The remote controller 200 may also receive signals from the image display apparatus 100 through the RF module 821. As needed, the remote controller 200 may transmit commands such as a power on/off command, a channel switch command, or a volume change command to the image display apparatus 100 through the IR module 823.

The user input unit 830 may include a keypad, a plurality of buttons, a touchpad and/or a touch screen. The user may enter commands to the image display apparatus 100 by manipulating the user input unit 830. If the user input unit 830 includes hard buttons, the user may input various commands to the image display apparatus 100 by pressing the hard buttons. If the user input unit 835 includes a touch screen displaying soft keys, the user may input various commands to the image display apparatus 100 by touching the soft keys. The user input unit 835 may also include various input tools other than those set forth herein, such as a scroll key and/or a jog wheel, which should not be construed as limiting the present invention.

The sensor unit 840 may include a gyroscopic sensor 841 and/or an acceleration sensor 843.

The gyroscopic sensor 841 may sense the movement of the remote controller 200, for example, in X-, Y-, and Z-axis directions, and the acceleration sensor 843 may sense the speed of the remote controller 200. The sensor unit 840 may further include a distance sensor for sensing the distance between the remote controller 200 and the display 180.

The output unit 850 may output a video and/or audio signal corresponding to manipulation of the user input unit 835 or corresponding to a signal received from the image display apparatus 100. The user may easily identify whether the user input unit 835 has been manipulated or whether the image display apparatus 100 has been controlled, based on the video and/or audio signal output by the output unit 850.

The output unit 850 may include a Light Emitting Diode (LED) module 851 which is turned on or off whenever the user input unit 835 is manipulated or whenever a signal is received from or transmitted to the image display apparatus 100 through the wireless communication module 825, a vibration module 853 which generates vibrations, an audio output module 855 which outputs audio data, and/or a display module 857 which outputs video data.

The power supply 860 supplies power to the remote controller 200. If the remote controller 200 is kept stationary for a predetermined time or longer, the power supply 860 may, for example, reduce or shut off supply of power to the remote controller 200 in order to save power. The power supply 860 may resume power supply if a predetermined key on the remote controller 200 is manipulated.

The memory 870 may store various types of programs and application data necessary to control or drive the remote controller 200. The remote controller 200 may wirelessly transmit signals to and/or receive signals from the image display apparatus 100 over a predetermined frequency band through the RF module 821. The controller 880 of the remote controller 200 may store information regarding the frequency band used for the remote controller 200 to wirelessly transmit signals to and/or wirelessly receive signals from the paired image display apparatus 100 in the memory 870, for later use.

The controller 880 provides overall control to the remote controller 200. The controller 880 may transmit a signal corresponding to a key manipulation detected from the user input unit 830 or a signal corresponding to the movement of the remote controller 200, as sensed by the sensor unit 840, to the image display apparatus 100 through the wireless communication unit 825.

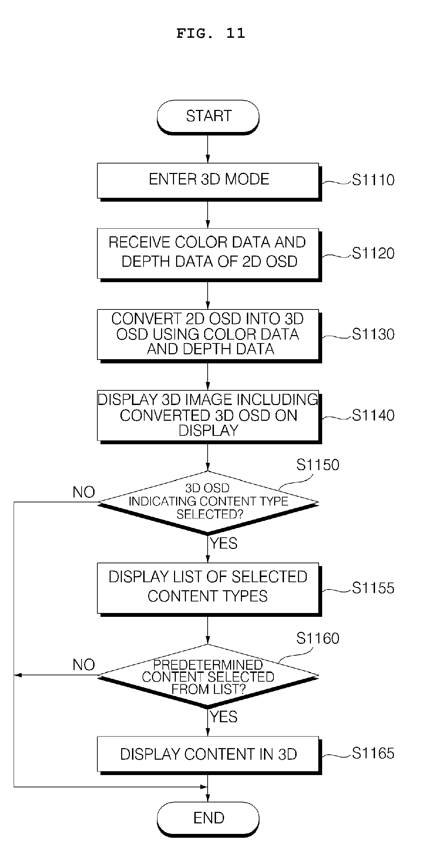

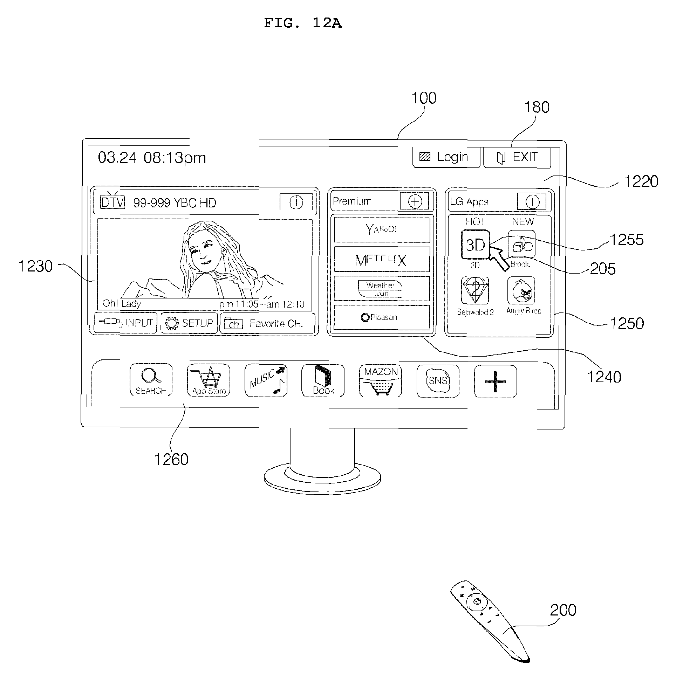

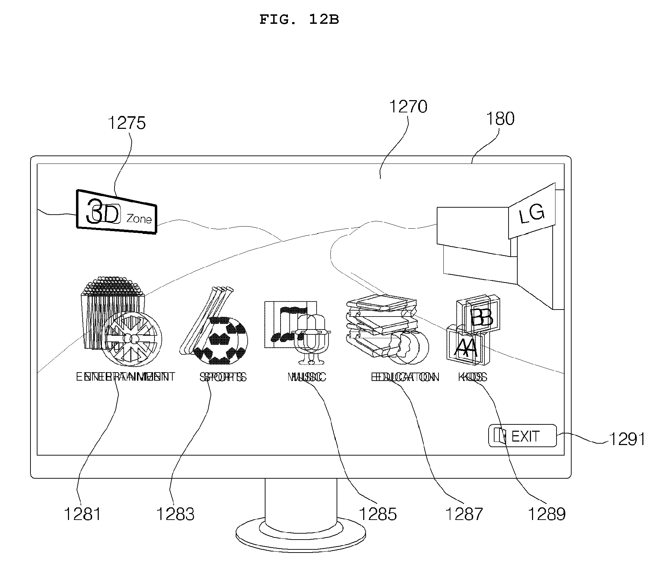

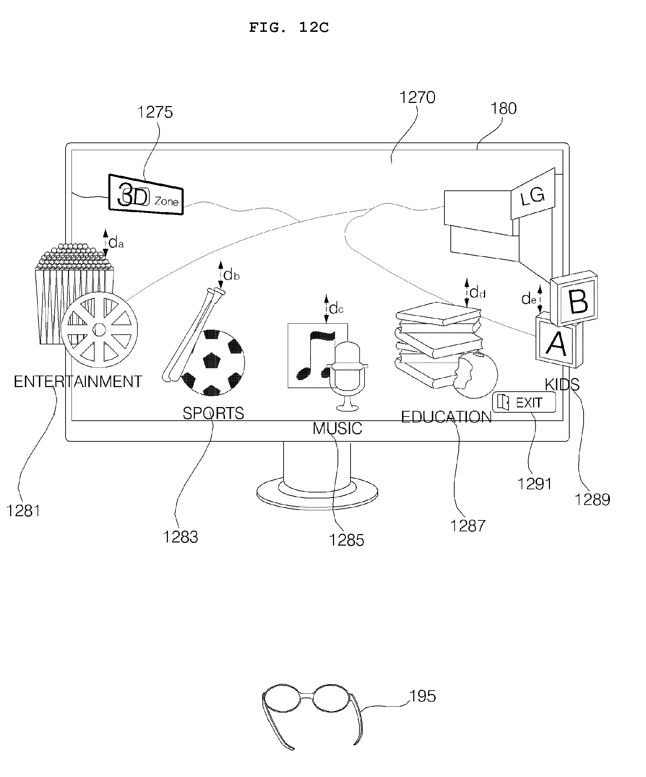

FIG. 11 is a flowchart illustrating a method for operating an image display apparatus according to an embodiment of the present invention, and FIGS. 12 to 18B are views referred to for describing various examples of the method for operating the image display apparatus, illustrated in FIG. 11.

Referring to FIG. 11, first, the image display apparatus enters a 3D mode (S1110). The image display apparatus may manually enter the 3D mode according to a user input. For example, if the remote controller 200 or a local key includes a hot key for entering the 3D mode, the image display apparatus may enter the 3D mode upon manipulation of the hot key.

Alternatively, if an object indicating entry into the 3D mode is selected when a home screen is displayed on the display 180, the image display apparatus may enter the 3D mode.

FIG. 12A shows a home screen 1220 displayed on the display 180. The home screen 1220 is a home screen of a smart TV and may include a region in which a broadcast image 1230 is displayed, a card object region in which movable or replaceable card objects 1240 and 1250 are displayed, and an application region in which a bookmark or an application menu 1260 is displayed.

FIG. 12A shows a content provider card object 1240 representing a content provider list and an application card object 1250 representing an application list and, more particularly, a 3D zone application item 1255 in the application card object 1250.

If the 3D zone application item 1255 is selected, the screen may be switched to a 3D zone screen as shown in FIG. 12B. The 3D zone application item 1255 may be selected using the remote controller 200 and, more particularly, a pointing device. That is, the 3D zone application item 1255 is selected using a pointer indicating movement of the remote controller 200.

The 3D zone screen 1270 is a 3D home screen as shown in FIG. 12B and may include 3D OSDs 1281, 1283, 1285, 1287 and 1289 indicating content types and an exit item 1291. The 3D zone screen 1270 may further include an OSD 1275 indicating a 3D zone screen.

As 3D OSDs, an "entertainment" item 1281, a "sports" item 1283, a "music" item 1285, an "education" item 1287 and a "kids" item 1289 are displayed. Since the 3D OSDs are displayed in a state of being divided according to content items, a user may conveniently select desired content. The exit item 1291 and the OSD 1275 indicating the 3D zone screen may be displayed in 3D OSD.

FIG. 12B shows the case in which a user views a 3D image 1270 displayed on the display 180 of the image display apparatus 100 without wearing 3D glasses in a glasses-type 3D image display method. The user may perceive the partially overlapped 3D OSDs 1281, 1283, 1285, 1287 and 1289.

Next, FIG. 12C shows a 3D image 1270 viewed using 3D glasses 195 in a glasses-type 3D image display method. The 3D OSDs 1281, 1283, 1285, 1287 and 1289 may have respective depths da, db, dc, dd and de.

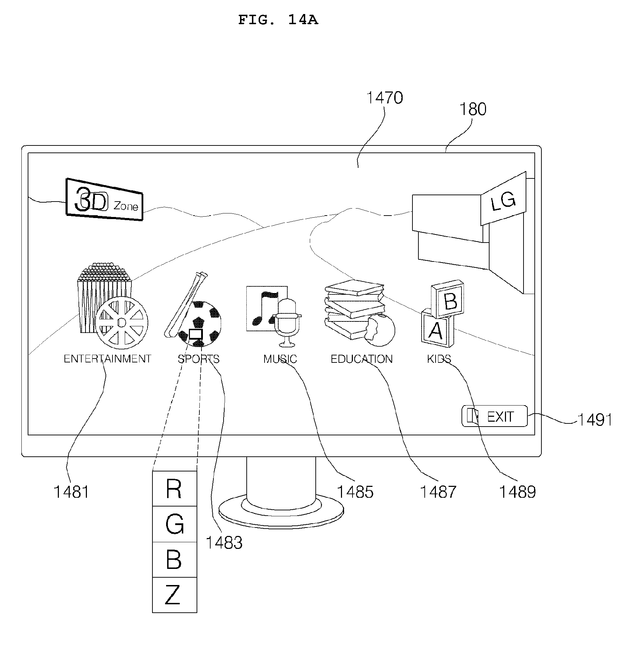

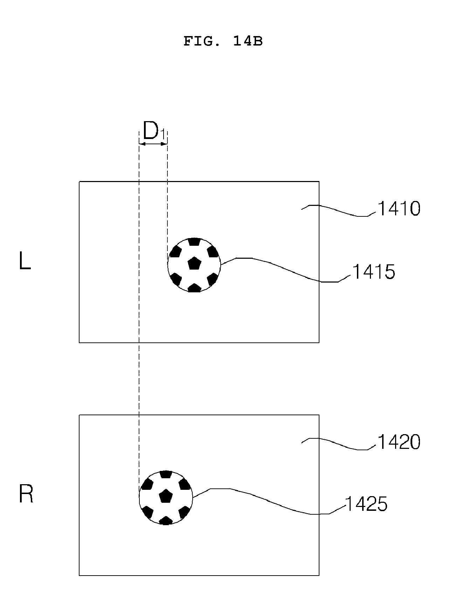

The OSD is identical to a graphical user interface (GUI) or an object generated by the OSD generator 340 of FIG. 3. The generation of the 3D OSD will be described below with reference to FIG. 14 and the subsequent figures.

Alternatively, if an object indicating entry into the 3D mode is selected when a menu is displayed on the display 180, the image display apparatus may enter the 3D mode.

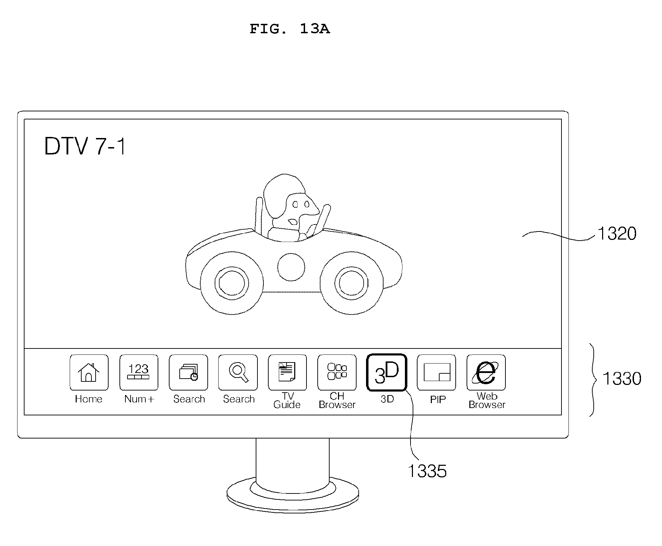

FIG. 13A shows a menu 1330 displayed when an image 1320 is displayed on the display 180. Such a menu 1330 may be displayed if a menu key of the remote controller 200 or the local key is manipulated.

FIG. 13A shows a home screen shortcut item, a broadcast channel number item, a recent viewing item, a search item, a guide item, a channel browser item, a 3D switch item 1335, a picture-in-picture (PIP) item, a web browser item, etc. as items of the menu 1330.

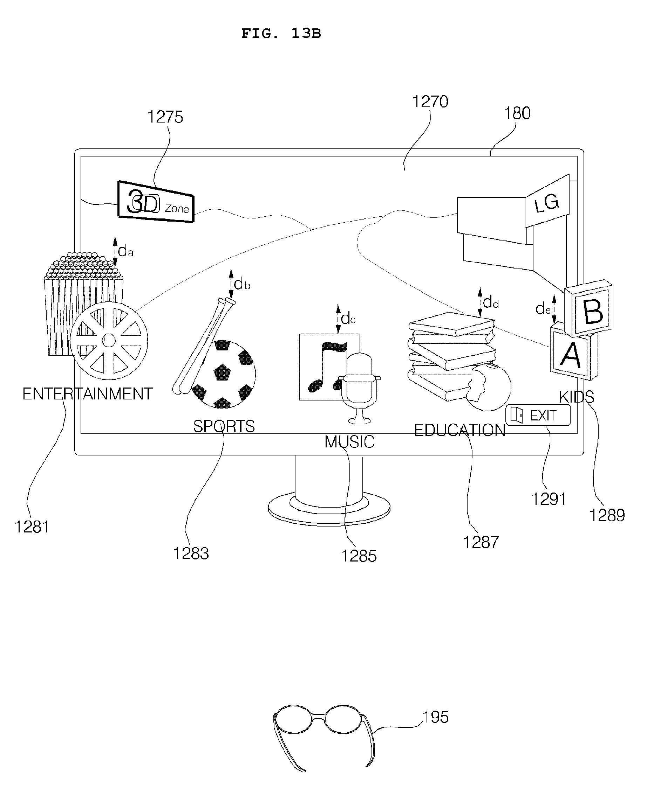

If the 3D switch item 1335 is selected, the screen may be switched to the 3D zone screen 1270 as shown in FIG. 13B.

The 3D switch item 1335 may be selected using the remote controller 200 and, more particularly, the pointing device. That is, the 3D switch item 1335 may be selected using a pointer indicating movement of the remote controller 200.

The 3D zone screen 1270 is a 3D home screen and may include 3D OSDs 1281, 1283, 1285, 1287 and 1289 indicating content types and an exit item 1291.

The image display apparatus may automatically enter the 3D mode. For example, if a user wears a 3D viewing device 195, the image display apparatus 100 detects that the user wears the 3D viewing device and automatically control entry into the 3D mode. Whether the user wears the 3D viewing device may be detected using the above-described camera unit.

If the image display apparatus automatically enters the 3D mode, the screen may be switched to the 3D zone screen 1270 as shown in FIG. 13B. The 3D zone screen 1270 may include 3D OSDs 1281, 1283, 1285, 1287 and 1289 indicating content types and an exit item 1291 as a 3D home screen.

Next, color data and depth data of 2D OSDs are received according to the 3D mode (S1120). The 2D OSDs are converted into 3D OSDs using the color data and the depth data (S1130). A 3D image including the converted 3D OSDs is displayed on the display (S1140).

The formatter 360 of the controller 170 may receive the color data and the depth data of the OSDs. For example, the formatter 360 of the controller 170 may generate a 2D image in order to generate the 3D home screen 1270 shown in FIG. 13B.

FIG. 14A shows a 2D image 1470 corresponding to the 3D home screen 1270 of FIG. 13B. The 2D image 1470 may include 2D OSDs 1481, 1483, 1485, 1487 and 1489 and an exit item 1491.

At this time, the 2D OSDs 1481, 1483, 1485, 1487 and 1489 and the exit item 1491 may be stored in the memory 140 or a memory of the controller 170. In particular, the color data and the depth data of the 2D OSDs 1481, 1483, 1485, 1487 and 1489 may be stored. Here, the color data may include chroma data and luma data.

The 2D image 1470 generated by the OSD generator 340 may be transmitted to the formatter 360 through the mixer 345 and the FRC 350. In particular, if no image is received from the video processor 320, the mixer 345 outputs only the 2D image 1470 generated by the OSD generator 340. Such a 2D image 1470 may be transmitted to the formatter 360 through the FRC 350.

The formatter 360 may receive data and, more particularly, the color data and the depth data of the 2D OSDs 1481, 1483, 1485, 1487 and 1489 of the 2D image 1470. The formatter 360 may receive data and, more particularly, color data of the exit item 1491 of the 2D image 1470 without depth data.

The formatter 360 may generate a left-eye image and a right-eye image having a disparity therebtween using the color data and the depth data of the 2D OSDs 1481, 1483, 1485, 1487 and 1489.

FIG. 14A and 14B show a left-eye image and a right-eye image generated using the 2D OSD 1483 associated with "sports" from among the 2D OSDs 1481, 1483, 1485, 1487 and 1489, for convenience of description.

If the color data RGB and the depth data Z are received in pixel units of the 2D OSD 1483, the formatter 360 may generate the left-eye image and the right-eye image in pixel units.

For example, if depth data Z1 of a first pixel of the 2D OSD 1483 of FIG. 14A is 10, a disparity between a first pixel of a left-eye image and a first pixel of a right-eye image corresponds to the depth of 10.

As another example, if depth data Z2 of a second pixel of the 2D OSD 1483 of FIG. 14A is 20, a disparity between a second pixel of a left-eye image and a second pixel of a right-eye image corresponds to the depth of 20.

In all pixels of the 2D OSD 1483 of FIG. 14A, a disparity between the left-eye image and the right-eye image may correspond to the set depth data Z. That is, as shown in FIG. 14B, the formatter 360 may generate a left-eye image 1410 including the 2D OSD 1415 and a right-eye image 1420 including the 2D OSD 1425 such that the disparity between the 2D OSDs becomes d1.

The formatter 360 may generate the left-eye image and the right-eye image in OSD units, that is, in object units. If an average of the depth data Z of the 2D OSD 1483 of FIG. 11A is 15, the left-eye image 1410 including the 2D OSD 1415 and the right-eye image 1420 including the 2D OSD 1425 are generated such that the disparity between the 2D OSDs is d1 corresponding to the depth of 15 as shown in FIG. 14B.

The display 180 may combine and display the left-eye image 1410 and the right-eye image 1420. The 2D OSD 1483 of FIG. 14A may be displayed as the 3D OSD 1283 having a predetermined depth as shown in FIG. 13B. Since the 2D OSD can be conveniently converted into the 3D OSD, it is possible to increase user convenience.

The formatter 360 of the controller 170 may arrange the generated left-eye image and right-eye image in any one of the side-by-side format (FIG. 4(a)), the top/down format (FIG. 4(b)), the interlaced format (FIG. 4(d)) and the checker box format (FIG. 4(e)).

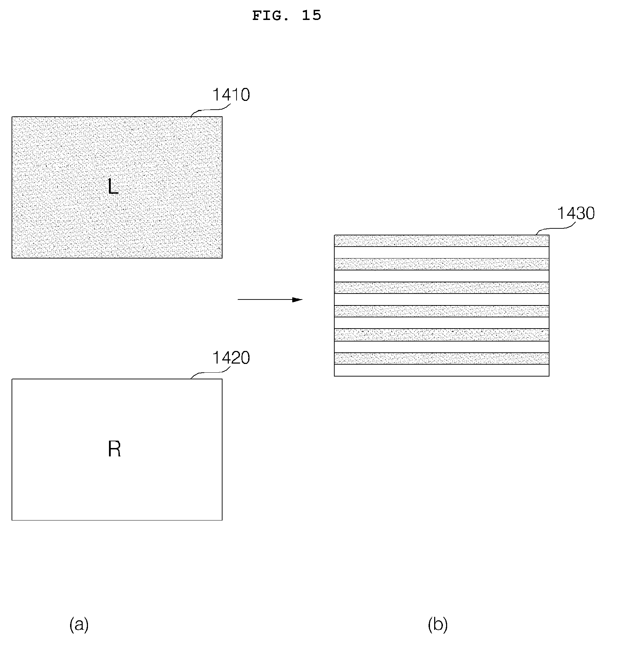

FIGs. 15a and 15b show image signal processing for viewing multiple images using polarized glasses. The formatter 360 of the controller 170 receives a left-eye image 1410 and a right-eye image 1420 and generates an image 1430 in which the left-eye image and the right-eye image are mixed in the interlaced format (FIG. 4(d)) among the formats shown in FIGs. 4(a)-4(e).

The display 180 simultaneously displays the image1430. At this time, a film including a left-eye polarized pattern and a right-eye polarized pattern corresponding to the interlaced format may be disposed on the display 180.

A user who wears a 3D viewing device 195 composed of the left-eye polarized glass and the right-eye polarized glass views only the 3D zone screen 1270 shown in FIG. 13B.

The formatter 360 of the controller 170 may arrange the received left-eye and right-eye images in the frame sequential format and sequentially display the arranged left-eye and right-eye images.

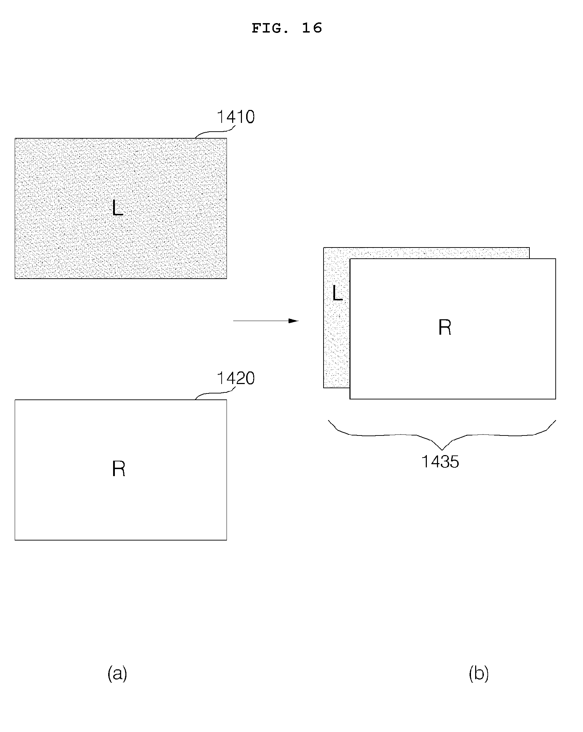

FIGs. 16A and 16B show image signal processing for viewing multiple images using shutter glasses.

The formatter 360 of the controller 170 receives the left-eye image 1410 and the right-eye image 1420 and generates images 1435 in which the left-eye image 1410 and the right-eye image 1420 are mixed in the frame sequential format (FIG. 4(c)) among the formats shown in FIGs. 4(a)-4(e). That is, a vertical synchronization frequency (or a frame rate) doubles.

The display 180 sequentially displays the images1435. A left-eye glass is opened during a first time (t=t1) and thus a user who wears the shutter glasses 195 views only the first displayed left-eye image 1410 of the displayed images 1435. A right-eye glass is opened during a second time t=t2 and thus a user who wears the shutter glasses 195 views only the right-eye image 1420 among the displayed images 1435. Thus, the user who wears the 3D viewing device 195 views the 3D zone screen 1270 shown in FIG. 13B.

Next, a determination as to whether 3D OSDs indicating content types (1281-1289) are selected when the 3D zone screen 1270 is displayed is made (S1150) and, if the 3D OSDs are selected, a content list is displayed (S1155).

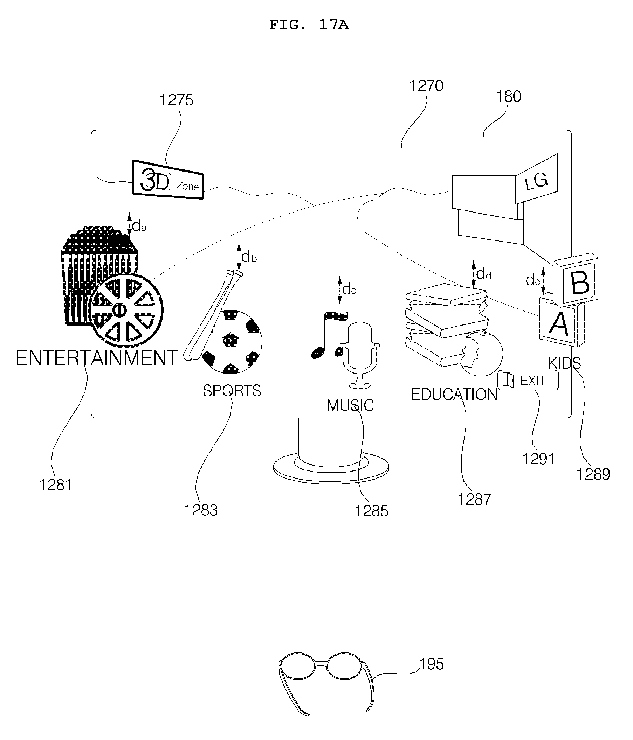

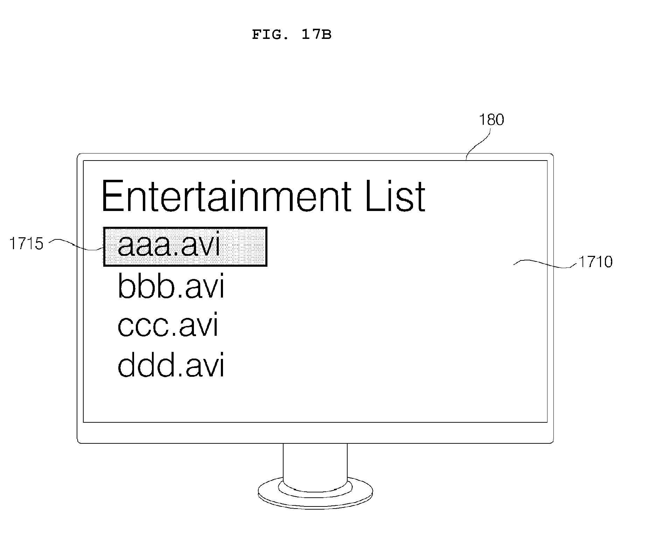

If the 3D OSD item 1281 indicating "entertainment" is selected when the 3D zone screen 1270 is displayed as shown in FIG. 17A, a content list 1710 associated with "entertainment" may be displayed as shown in FIG. 17B.

The content list 1710 may be displayed in the form of a 2D image as shown in the figure. Alternatively, the content list 1710 may be displayed in the form of a 3D image.

Accordingly, since the content list 1710 can be conveniently displayed, it is possible to increase user convenience.

The 3D OSD item 1281 may be selected using the remote controller 200 and, more particularly, the pointing device. That is, the 3D OSD item 1281 may be selected using the pointer indicating movement of the remote controller 200.

Next, a determination as to whether predetermined content is selected from the content list is made (S1160) and, if the predetermined content is selected, the content is displayed in 3D (S1165).

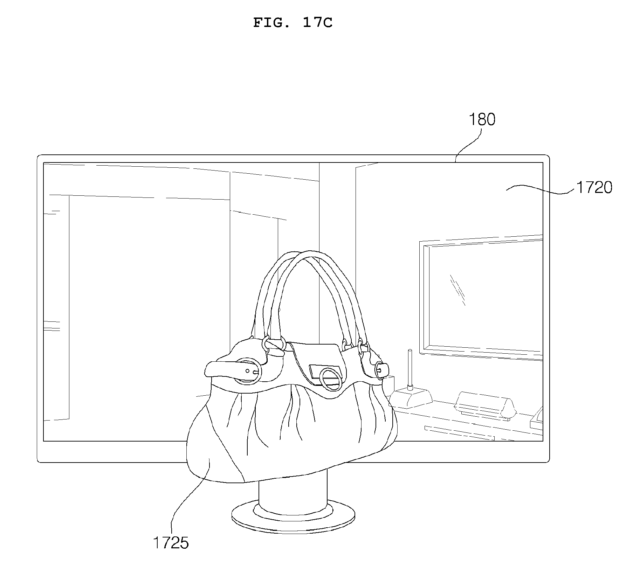

If a specific content item 1715 is selected when a content list 1710 associated with "entertainment list" is displayed as shown in FIG. 17b, content corresponding thereto may be displayed as a 3D image 1720 as shown in FIG. 17C. In the figure, the 3D image 1720 includes a 3D object 1725 having a predetermined depth.

If the selected content is a 3D image in FIG. 17B, as described above, the content can be immediately displayed as the 3D image 1720. However, if the selected content is an externally input 2D image in FIG. 17B, conversion into a 3D image is necessary.

For conversion into a 3D image, the video processor 320 of the controller 170 processes a video signal and sends the processed 2D image to the mixer 345, the FRC 350 and the formatter 360. The formatter 360 may convert a 2D image into a 3D image.

For example, the formatter 360 may detect edges or a selectable object from the 2D video signal according to a 3D image generation algorithm and generate a 3D video signal with an object based on the detected edges or the selectable object. The generated 3D video signals may be separated into a left-eye image signal L and a right-eye image signal R as described above.

As another example, if the selected content is an externally input 3D image and, more particularly, includes color data and depth data, as described above, the formatter 360 may divide the content into a left-eye image and a right-eye image using the color data and the depth data.

The content item 1715 may be selected using the remote controller 200 and, more particularly, the pointing device. That is, the content item 1715 may be selected using the pointer indicating movement of the remote controller 200.

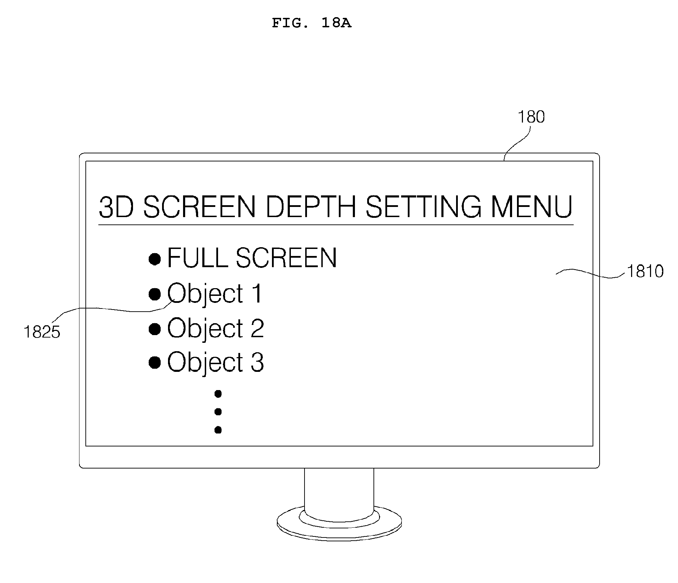

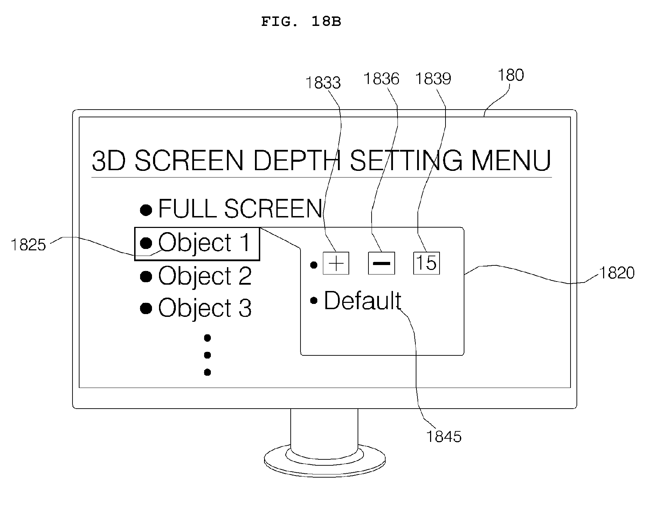

FIGs. 18A and 18B show a depth setting example of a 3D screen.

First, if a specific key of the remote controller 200 is pressed or a menu selection input displayed on the display is received, the image display apparatus may enter a 3D screen depth setting mode.

FIG. 18A shows a 3D screen depth setting menu 1810 displayed on the display 180.

For example, if the image display apparatus enters the 3D screen depth setting mode when the 3D zone screen 1270 is displayed as shown in FIG. 12B, object items or OSD items may be displayed as shown in FIG. 18A.

FIG. 18A shows all OSD items, an OSD item 1, an OSD item 2, ...., up to OSD item n.

The OSD item 1, OSD item 2, up to OSD item n, in FIG. 18A may correspond to the 3D OSDs 1281, 1283, 1285, 1287 and 1289, the exit item 1291, and the OSD 1275 indicating the 3D zone screen of FIG. 12B.

If a first OSD item 1825 is selected from among the OSD items shown in FIG. 18A, a pull-down menu 1820 may be displayed as a sub menu as shown in FIG. 18B.

The pull-down menu 1820 for controlling the depth of each OSD item may include a "+" item 1833 for increasing depth, a "-" item 1836 for decreasing depth, a depth display item 1839 for displaying a controlled depth value and a default item 1845 for setting a predetermined depth.

A user may select the "+" item 1833 or the "-" item 1836 using the remote controller 200. Thus, it is possible to conveniently control the depth of the OSD item.

For example, if it is assumed that the first OSD item 1825 of FIG. 18B corresponds to a 3D OSD 1281 of FIG. 12B and the depth of the first OSD item 1825 is set to a value of "15" as shown in FIG. 18B, the formatter 360 may generate a left-eye image and a right-eye image such that a disparity between the OSD of the left-eye image and the OSD of the right-eye image corresponds to 15.

Thus, the user can perceive a 3D OSD 1281 which appears to protrude according to the depth set to "15".

The image display apparatus and the method for operating the same according to the foregoing embodiments are not restricted to the embodiments set forth herein. Therefore, variations and combinations of the exemplary embodiments set forth herein may fall within the scope of the present invention.

The method for operating an image display apparatus according to the foregoing embodiments may be implemented as code that can be written to a computer-readable recording medium and can thus be read by a processor. The computer-readable recording medium may be any type of recording device in which data can be stored in a computer-readable manner. Examples of the computer-readable recording medium include a ROM, a RAM, a CD-ROM, a magnetic tape, a floppy disc, an optical data storage, and a carrier wave (e.g., data transmission over the Internet). The computer-readable recording medium can be distributed over a plurality of computer systems connected to a network so that computer-readable code is written thereto and executed therefrom in a decentralized manner. Functional programs, code, and code segments needed for realizing the embodiments herein can be construed by one of ordinary skill in the art.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A method for operating an image display apparatus, comprising:
entering (S1110) a 3-dimensional (3D) mode by receiving a user input;
receiving (S1120) color data and depth data of a 2-dimensional (2D) on screen display (OSD);
converting (S1130) the 2D OSD into a 3D OSD using the color data and the depth data to create a left-eye image and a right-eye image; and
displaying (S1140) a 3D image including the converted 3D OSD on a display.

2. The method according to claim 1, wherein the 2D OSD is converted into the 3D OSD in pixel units using the color data and the depth data of the 2D OSD.

3. The method according to claim 1, wherein the 2D OSD is converted into the 3D OSD in object units using the color data and the depth data of the 2D OSD.

4. The method according to claim 1, wherein the entering the 3D mode is performed when an object on the display indicating entry into the 3D mode is selected.

5. The method according to claim 1, wherein the entering the 3D mode is performed when a specific key of a remote controller is manipulated.

6. The method according to claim 1, wherein the 3D image is a 3D screen including a 3D OSD indicating a content type and an exit item.

7. The method according to claim 6, further comprising:
displaying a content list if the 3D OSD indicating the content type is selected; and
displaying content in 3D if predetermined content is selected from the content list.

8. The method according to claim 1, wherein the color data and the depth data of the 2D OSD are previously stored data.

9. The method according to claim 1, further comprising adjusting the depth data of the 2D OSD according to a user input; and
storing the adjusted depth data in a memory.

10. An image display apparatus comprising:
a controller (170) configured to receive a user input for entering a 3-dimensional mode, convert a 2-dimensional (2D) on screen display (OSD) into a 3-dimensional (3D) OSD using color data and depth data of the 2D OSD when entering the 3D mode; and
a display (180) configured to display a 3D image including the converted 3D OSD.

11. The image display apparatus according to claim 10, wherein the controller (170) converts the 2D OSD into the 3D OSD in pixel units using the color data and the depth data of the 2D OSD.

12. The image display apparatus according to claim 10, wherein the controller (170) generates a left-eye image and a right-eye image having a disparity therebetween using the color data and the depth data.

13. The image display apparatus according to claim 10, wherein the 3D image is a 3D screen including a 3D OSD indicating a content type and an exit item.

14. The image display apparatus according to claim 13, wherein the display (190) is configured to display a content list if the 3D OSD indicating the content type in the 3D image is selected, and displays content in 3D if predetermined content is selected from the content list.

15. The image display apparatus according to claim 10, further comprising a memory (140) configured to store the color data and the depth data of the 2D OSD.
